# EUROPÄISCHE PATENTSCHRIFT

(11) **EP 1 456 054 B1**
(45) Veröffentlichungstag und Bekanntmachung des Hinweises auf die Patenterteilung: **12.04.2006**
(21) Anmeldenummer: 02791637.8
(22) Anmeldetag: 13.12.2002
(51) Int. Cl.: B60N 2/24, B60N 2/68, B60N 2/42

(54) **SICHERHEITSZELLE**
SAFETY CABIN
HABITACLE DE SECURITE

(30) Priorität: 21.12.2001 DE 20121185 U
(43) Veröffentlichungstag der Anmeldung: 15.09.2004
(73) Patentinhaber: CarboSystems GmbH, 56651 Niederzissen (DE)
(72) Erfinder: HARTELT, Arndt, 53539 Kelberg (DE); GERL, Oswald, 53179 Bonn (DE)
(74) Vertreter: Rumrich, Gabriele
(86) Internationale Anmeldenummer: PCT/DE2002/004613
(87) Internationale Veröffentlichungsnummer: WO 2003/055715

(56) Entgegenhaltungen:
- DE-A- 10 029 843
- DE-U- 29 924 054
- GB-A- 2 201 923
- NL-C- 1 019 104
- US-A- 5 947 515

## Beschreibung

Die Erfindung betrifft eine Sicherheitszelle, insbesondere für Kraftfahrzeuge im Tourenwagenrennsport nach dem Oberbegriff des ersten Patentanspruchs. Die Sicherheitszelle wird in Kraftfahrzeugen, vorzugsweise im Tourenwagen-Rennsport, eingesetzt um den Fahrersitz aufzunehmen und somit den Fahrer gegen Verletzungen infolge eines Unfalls zu schützen.
Aus DE 299 24 054 U1 ist ein Sicherheitssitz bekannt welcher zum Insassenschutz im Rennsport eingesetzt wird. Hierbei handelt es sich um einen Sicherheitssitz welcher in Monocoque-Bauweise ausgeführt ist und durch den Einsatz von Faserverbundwerkstoffen (CFK) besonders leicht baut. Die Steifigkeit des Sicherheitssitzes wird durch die Bildung einer Honigwabenstruktur aus CFK erzielt, wodurch die Eigenschaft des CFK, hohe Steifigkeit bei niedrigem Gewicht nur gewichtsseitig ideal genutzt wird. Als weiterer Nachteil dieser Konzeption ist die hohe fahrerspezifische Gestaltung des sicherheitssteigernden Elements anzusehen, da jeder Sicherheitssitz auf den Fahrer individuell abgestimmt werden muss, was mit erheblichen Kosten verbunden ist. Sicherheitstechnisch bedenklich ist die Gestaltung der Seitenwände, da diese den Fahrer seitlich nicht vollständig abdecken. Weiterhin weisen die Seitenwände eine in Richtung zur Rückwand gerichtete konkave Wölbung auf, die in einem relativ kleinen Übergangsradius Richtung zum Fußbereich weiterverläuft, so dass bei einem harten Crash ein Knicken in diesem geschwächten Seitenwandbereich erfolgen kann.

Aufgabe der Erfindung ist es eine Sicherheitszelle vorzuschlagen, welche eine geringeren fahrerspezifischen Individualisierungsgrad aufweist, flexibel in verschiedenen Fahrzeugtypen einsetzbar ist und höchsten Sicherheitsbedingungen gerecht wird.

Diese Aufgabe wird erfindungsgemäß mit den kennzeichnenden Merkmalen des ersten Patentanspruchs gelöst. Die Sicherheitszelle (Monocoque) ist dabei im Wesentlichen in einen Sitzbereich und einen Fußbereich aufgeteilt und wird aus langfasrigen Kohlestofffasern mit laminarer Struktur in Kombination mit Aluminium und/oder einer Aluminium- Wabenstruktur hergestellt. Hierbei kann die Steifigkeit der Sicherheitszelle mittels Faserorientierung und/oder der Orientierung einzelner Fasern oder Faserschichten zueinander variiert werden. Die Anbindung von Funktionsträgern erfolgt durch die separate Einbringung von Aufnahmeblöcken, wobei diese über in die Monocoquestruktur integrierte Aluminiumplatten in das Monocoque eingebunden werden können, wodurch auch die mittlere Steifigkeit der Gesamtstruktur erhöhbar ist. Es ist auch möglich, dass die an die Aufnahmeblöcke anzubindenden Funktionsträger als Befestigung für die Lenksäule, den Schalthebelmechanismus oder die Pedalanlage ausgeführt sind. Das Monocoque kann auch Öffnungen und/oder Vertiefungen aufweisen, mittels derer die Funktionsträger (Aufnahmeblöcke) an das Monocoque angebunden werden. Am Ende des Fußraums ist die Sicherheitszelle offen oder teilweise bzw. vollständig verschlossen, wobei sie Öffnungen und/oder Bohrungen im Rücken-, Seiten- und Boden- bereich aufweist. Durch die Öffnungen/Bohrungen im Bodenbereich und oder im Seitenbereich und/oder durch eingebettete Funktionsträger wird die Sicherheitszelle in ihrer Position an der Fahrzeugrahmensttuktur fixiert, wodurch das Monocoque auch unter Einwirkung großer Deformationskräfie seine Position im Fahrzeug beibehält. Gleichzeitig wird durch die Mehrpunktfixierung die Schubsteifigkeit der Bodengruppe des Fahrzeuges erhöht. Im Bodenbereich der Sitzzelle werden dabei bevorzugt insgesamt 8 Befestigungspunkte integriert, wobei jeweils vier Reihen mit jeweils zwei paarweise im Abstand zueinander angeordneten Befestigungspunkten vorgesehen sind.
Der am weitesten in Richtung zur Fahrzeugaußenseite liegende erste Seitenwandbereich des Monocoques deckt die seitlich projizierte Fläche des Fahrers in aufrecht sitzender, sowie mit in Bauteillängsrichtung geneigter Position bis zu dessen Schulter in Höhe und
Breite vollständig ab, um die Sicherheit bei einem Seitenaufprall zu erhöhen. Der zweite Seitenwandbereich des Monocoques deckt die seitlich projizierte Fläche des Fahrers nur in aufrecht sitzender Position, bis zu dessen Schulter in Höhe und Breite vollständig ab. Der Kopfschutzbereich kann separat an die Sicherheitszelle angebunden werden, wodurch sich im Sitzbereich eine teilweise Überlappung mit dem anzubindenden Kopfschutzbereich ergibt. Kopfschutzbereich innen und/oder außen am Sitzbereich befestigbar ist. Bevorzugt wird der Kopfschutzbereich an einer, im Sitzbereich befestigbaren, Sitzaufnahme angeordnet.
Die Lenkung kann lastabhängig mit dem Monocoque verbunden sein, wobei sich auch eine Höhenverstellung des Lenkrades, durch die Dimensionierung, bzw. Positionierung des Aufnahmeblocks im bzw. auf dem Monocoque möglich ist.

Vorteilhaft ist weiterhin im Brandfall, wenn zumindest die Außenkontur der Sicherheitszelle mit einer feuerfesten oder flammbeständigen Beschichtung oder Folie oder einer hitzebeständigen Beschichtung versehen ist.
Im Bereich der Seitenwände und/oder des Fußbereiches können ein oder mehrere Airbags integriert sein, deren Anbindung über Funktionselemente erfolgt.
Um in den besonders gefährdeten Bereichen einen größtmöglichen Schutz zu bieten, sind der am weitesten in Richtung zur Außenseite des Fahrzeuges angeordnete Seitenwandbereich und/oder der Fußbereich mit einer im Vergleich zu den anderen Bereichen der Sitzzelle erhöhten Anzahl von Kohlenstofffaserschichten und/oder Schichten aus Aluminium oder Aluminiumwabenstruktur versehen.

Die Erfindung wird nachfolgend anhand von Ausführungsbeispielen und zugehörigen Zeichnungen näher erläutert.

Es zeigen:
- Fig.1:: Sicherheitszelle in dreidimensionaler Ansicht,
- Fig.2:: Sicherheitszelle in dreidimensionaler Ansicht mit Öffnungen/Vertiefungen zur Anbindung von Funktionsträgern,
- Fig.3:: Sicherheitszelle in der Seitenansicht,
- Fig.4:: Sicherheitszelle in der Draufsicht

Fig.l zeigt die Sicherheitszelle mit den zwei Hauptbestandteilen Sitzbereich SA und Fußbereich FB. Der Sitzbereich SA weist einen Rückenlehnenbereich SR, einen ersten Seitenwandbereich SW 1 und einen zweiten Seitenwandbereich SW2, wobei sich die Seitenwandbereiche SW1, SW2 bis zum Fußbereich FB erstrecken, sowie einen Bodenbereich BB auf.

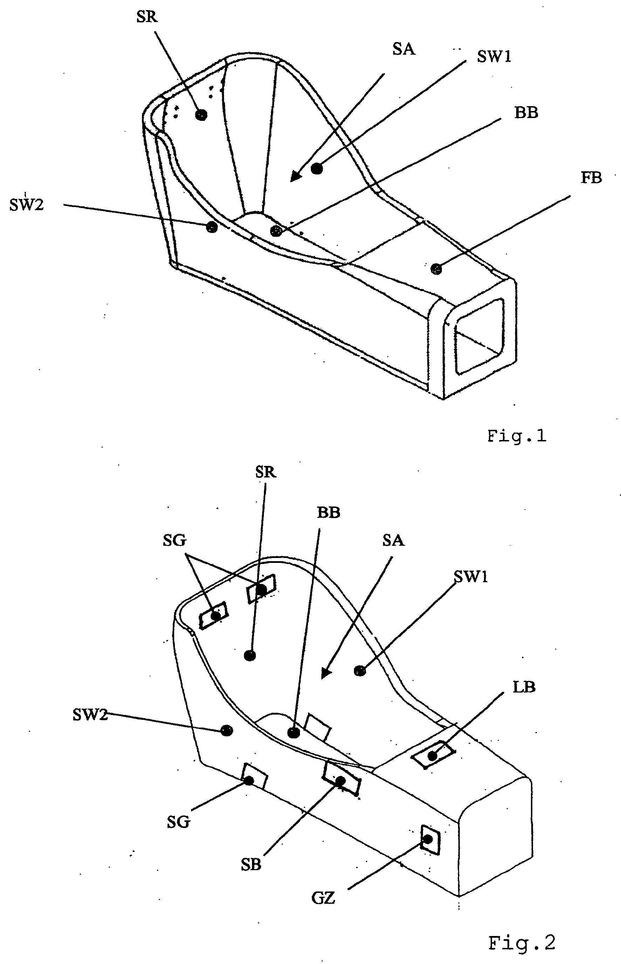

Fig. 2 zeigt die Sicherheitszelle mit an den entsprechenden Positionen mittels Rechtecken angedeuteten und in die Monocoquestruktur eingebetteten Funktionselementen: LB für die Aufnahme der Lenkstange, GZ für die Aufnahme des Gaszugs, SB für die Aufnahme des Schalthebelmechanismus sowie SG die Montageposition für den Sicherheitsgurt.

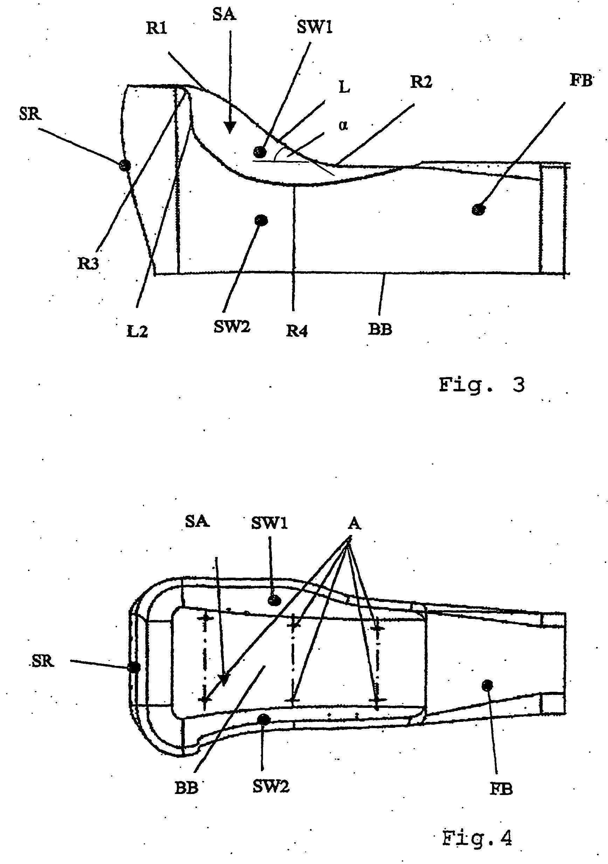

In Fig. 3 ist die Sicherheitszelle in der Seitenansicht dargestellt, mit etwa in der Mitte des Fahrzeuges liegenden zweiten Seitenwand SW2 im Vordergrund. Die obere Kante der zweiten Seitenwand SW2 verläuft dabei vom Sitzbereich SA zum Fußbereich FB zuerst in einem konvex gekrümmten Radius R3, an den sich ein linearer vertikal in Richtung zum Boden weisender Bereich L2 anschließt, an den ein im Wesentlichen konvex gekrümmter Bereich R4 angrenzt. Die obere Kante der ersten Seitenwand SW1 verläuft vom Sitzbereich SA zum Fußbereich FB zuerst in einem konvex gekrümmten Radius R1, in einem sich anschließenden annähernd linearen im spitzen Winkel α in Richtung zum Fußbereich FB nach unten geneigten Bereich L und einem sich anschließenden konkav gekrümmten Radius R2. Durch die nur in Fahrtrichtung geneigte Orientierung des Seitenwandverlaufes mit den nur leicht geschwungenen Übergängen ist ein Knicken des Monocoques ausgeschlossen.

Fig.4 zeigt die Sicherheitszelle in der Draufsicht mit den Anbindungspunkten A zur Fixierung an der nichtdargestellten Rahmenstruktur. Durch die festgelegten Anbindungspunkte A ist die einfache Austauschbarkeit der Sicherheitszelle gewährleistet.

### Die Wirkungsweise der Sicherheitszelle ist die Folgende:

Um den Fahrer eines Tourenwagens gegen Verletzungen durch einen Unfall zu schützen, muss der Überlebensraum des Fahrers durch eine besonders steife Struktur, auch einen harten Crash standhaltende Struktur gesichert werden. Diesen hohen Sicherheitsbedingungen wird durch den Einsatz einer Sicherheitszelle aus langfasrigen Kohlenstofffasern definierter Orientierung mit zwischen den Kohlenstofffaserschichten eingebetteter Aluminiumwabenstruktur Rechnung getragen. Die Sicherheitszelle weist dabei im wesentlichen einen Sitzbereich SA und einen Fußbereich FB (Fig.1) auf. Insbesondere durch den Einsatz von langfasrigen Kohlenstofffasern in Verbindung mit Aluminiumwaben kann die Steifigkeit der Sicherheitszelle, wie z.B. im Fußbereich FB, gezielt erhöht werden, um somit eine mögliche Deformation des Überlebensraumes wie z:B. im Falle eines Frontalcrashs zu verhindern. Diese Erhöhung der Steifigkeit und/oder Elastizität kann durch eine entsprechend anpassbare Anzahl und/oder Orientierung der Lagen von Fasern/Faserschichten erfolgen, wobei die Zonen mit erhöhter Steifigkeit bzw. Zonen mit gewünschter Elastizität durch die Orientierung einzelner Fasern und/oder Faserschichten bzw. Aluminiumwabenschichten zueinander beeinflusst werden können.

Um den Fahrer gegen Verletzungen durch weitere Funktionsteile wie Lehnkrad/Lenksäule und Schalthebelmechanismus zu schützen, sind diese in die Sicherheitszelle integriert. Diese Integration kann über Aufnahmeblöcke erfolgen, welche selbst eine sehr hohe Steifigkeit aufweisen, wodurch die hieran angebundenen Teile wie Lenkblock LB, Schaltblock SB, Gaszug GZ, Gurtsystem SG (Fig.2) sowie die Anbindungspunkte A (Fig. 4) des Monocoques an der Fahrzeugrahmenstruktur auch bei Einwirkung großer Kräfte ihre Position beibehalten. Es ist jedoch auch möglich, die Aufnahmeblöcke auf zuvor in die Struktur eingebrachte Aluminiumplatten lastabhängig zu lagern. Für den Fall eines Seitenaufpralls weist die Sicherheitszelle eine langgestreckte Seitenwand SW (Fig.3) in Richtung Fahrzeugmitte auf, um somit ein Ausknicken in Richtung der Fahrzeugmitte zu verhindern, wodurch das Verletzungsrisiko ebenfalls reduziert wird.
Die Sicherheit des Sicherheitssitzes kann durch eine Beschichtung der gesamten Sicherheitszelle oder zumindest der Außenkontur mit einer feuerfesten oder flammbeständigen Beschichtung oder Folie oder mit einer hitzebeständigen Beschichtung und durch das Anbringen von Airbags weiter erhöht werden.
Nicht näher dargestellt ist die Verstärkung besonders gefährdeter Bereiche durch eine erhöhte Anzahl von Kohlenstofffaserschichten und/oder Schichten aus Aluminium oder Aluminiumwabenstruktur.
Insgesamt wird eine Sicherheitssitzzelle für den Tourenwagenrennsport geschaffen, die auch höchsten Beanspruchungen standhält und somit für den Fahrer ein Maximum an Sicherheit bietet.

## Patentansprüche

1. Sicherheitszelle, insbesondere für Kraftfahrzeuge im Tourenwagen-Rennsport, aus Faserverbundwerkstoff (CFK) in Monocoque-Bauweise, wobei das Monocoque aus einem Sitzbereich (SA) und einem Fußbereich (FB) besteht und Seitenwandbereiche (SW1, SW2) aufweist, **dadurch gekennzeichnet, dass** das Monocoque aus langfasrigen Kohlenstofffasern mit laminarer Struktur in Kombination mit Aluminium und/oder einer Aluminium-Wabenstruktur hergestellt ist.

2. Sicherheitszelle nach Anspruch 1, **dadurch gekennzeichnet, dass** die Steifigkeit der Sicherheitszelle mittels Faserorientierung und/oder der Orientierung einzelner Fasern oder Faserschichten zueinander variierbar ist.

3. Sicherheitszelle nach einem der Ansprüche 1 oder 2, **dadurch gekennzeichnet, dass** die Anbindung von Funktionsträgern und/oder Anbindungspunkten (A) durch separat einzubringende Aufnahmeblöcke erfolgt.

4. Sicherheitszelle nach Anspruch 3, **dadurch gekennzeichnet, dass** die Anbindung der Aufnahmeblöcke über in die Monocoquestruktur integrierte Aluminiumplatten erfolgen kann.

5. Sicherheitszelle nach einem oder mehreren der Ansprüche 1 bis 4, **dadurch gekennzeichnet, dass** durch die Anbindung und Dimensionierung von Funktionsträgern und/oder Anbindungspunkten (A) die mittlere Steifigkeit der Gesamtstruktur erhöht wird.

6. Sicherheitszelle nach einem oder mehreren der Ansprüche 3 bis 5 , **dadurch gekennzeichnet, dass** wenigstens ein auf der Oberseite des Fußbereiches (FB) integrierter Funktionsträger (LB) als Anbindung für die Lenksäule ausgebildet ist.

7. Sicherheitszelle nach einem oder mehreren der Ansprüche 3 bis 6, **dadurch gekennzeichnet, dass** ein Funktionsträger (SB) in einer der Seitenwände (SW1,SW2) als Befestigung für den Schalthebelmechanismus ausgebildet ist.

8. Sicherheitszelle nach einem oder mehreren der Ansprüche 3 bis 7, **dadurch gekennzeichnet, dass** ein in der Unterseite des Fußbereiches (FB) integrierter Funktionsträger als Befestigung für die Pedalanlage ausgebildet ist.

9. Sicherheitszelle nach einem oder mehreren der Ansprüche 3 bis 8, **dadurch gekennzeichnet, dass** das Monocoque Öffnungen zur Anbindung der Funktionsträger aufweist.

10. Sicherheitszelle nach einem oder mehreren der Ansprüche 3 bis 9, **dadurch gekennzeichnet, dass** das Monocoque Vertiefungen zur Anbindung der Funktionsträger aufweist.

11. Sicherheitszelle nach einem oder mehreren der Ansprüche 1 bis 10, **dadurch gekennzeichnet, dass** das Monocoque am Ende des Fußraums (FB) teilweise oder vollständig verschlossen ist.

12. Sicherheitszelle nach einem oder mehreren der Ansprüche 1 bis 11, **dadurch gekennzeichnet, dass** das Monocoque Öffnungen und/oder Bohrungen im Rückenlehnenbereich (SR), Seitenwandbereich (SW1, SW2)- und Bodenbereich (BB) aufweist.

13. Sicherheitszelle nach einem oder mehreren der Ansprüche 3 bis 12, **dadurch gekennzeichnet, dass** die Anbindung des Monocoques an die Fahrzeugrahmenstruktur über Öffnungen und/oder Bohrungen im Bodenbereich (BB) und/oder Öffnungen/Bohrungen im Seitenwandbereich (SW1, SW2) und/oder über Anbindungspunkte (A) im Bodenbereich (BB) erfolgt.

14. Sicherheitszelle nach einem oder mehreren der Ansprüche 1 bis 13, **dadurch gekennzeichnet, dass** die der Fahrertür zugewandte Seitenwand (SW1) des Monocoques die seitlich projizierte Fläche des Fahrers in aufrecht sitzender, sowie mit in Bauteillängsrichtung geneigter Position bis zu dessen Schulter in Höhe und Breite vollständig abdeckt.

15. Sicherheitszelle nach einem oder mehreren der Ansprüche 1 bis 14, **dadurch gekennzeichnet, dass** die der Fahrertür abgewandte Seitenwand (SW2) des Monocoques die seitlich projizierte Fläche des Fahrers in aufrecht sitzender Position, bis zu dessen Schulter in Höhe und Breite vollständig abdeckt.

16. Sicherheitszelle nach einem oder mehreren der Ansprüche 1 bis 15, **dadurch gekennzeichnet, dass** das in Richtung zum Kopfbereich weisende Ende des Sitzbereiches (SA) zu einem Kopfschutzbereich überlappt.

17. Sicherheitszelle nach einem oder mehreren der Ansprüche 1 bis 16, **dadurch gekennzeichnet, dass** der Kopfschutzbereich innen und/oder außen am Sitzbereich (SA) befestigbar ist.

18. Sicherheitszelle nach einem oder mehreren der Ansprüche 1 bis 17, **dadurch gekennzeichnet, dass** der Kopfschutzbereich an einer, im Sitzbereich (SA) befestigbaren, Sitzaufnahme angeordnet ist.

19. Sicherheitszelle nach einem oder mehreren der Ansprüche 1 bis 18, **dadurch gekennzeichnet, dass** ein Personenrückhaltesystem in das Monocoque integriert ist.

20. Sicherheitszelle nach einem oder mehreren der Ansprüche 6 bis 19, **dadurch gekennzeichnet, dass** die Lenksäule mittels der Dimensionierung des Aufnahmeblocks höhenverstellbar ist.

21. Sicherheitszelle nach einem oder mehreren der Ansprüche 1 bis 20, **dadurch gekennzeichnet, dass** das Monocoque unter Einwirkung großer Deformationskräfte seine Position im Fahrzeug beibehält.

22. Sicherheitszelle nach einem oder mehreren der Ansprüche 6 bis 21, **dadurch gekennzeichnet, dass** die Lenksäule lastabhängig gelagert ist.

23. Sicherheitszelle nach einem oder mehreren der Ansprüche 1 bis 22, **dadurch gekennzeichnet, dass** die obere Kante der ersten Seitenwand (SW1) vom Sitzbereich (SA) zum Fußbereich (FB) zuerst in einem konvex gekrümmten Radius (R1), in einem sich anschließenden annähernd linearen Bereich (L) im spitzen Winkel (α) in Richtung zum Fußbereich (FB) nach unten geneigten Bereich (L) und einem sich anschließenden konkav gekrümmten Radius (R2) verläuft.

24. Sicherheitszelle nach einem oder mehreren der Ansprüche 1 bis 23, **dadurch gekennzeichnet, dass** die obere Kante der zweiten Seitenwand (SW2) vom Sitzbereich (SA) zum Fußbereich (FB) zuerst in einem konvex gekrümmten Radius (R3) verläuft, an den sich ein linearer, vertikal in Richtung zum Bodenbereich (BB) weisender Bereich (L2) anschließt, an den ein im wesentlichen konvex gekrümmter Bereich (R4) angrenzt.

25. Sicherheitszelle nach einem oder mehreren der Ansprüche 12 bis 24, **dadurch gekennzeichnet, dass** im Bodenbereich (BB) der Sitzzelle insgesamt 8 Anbindungspunkte (A) zur Befestigung an der Bodengruppe integriert sind, wobei jeweils vier Reihen mit jeweils zwei paarweise im Abstand zueinander angeordnete Anbindungspunkte (A) vorgesehen sind.

26. Sicherheitszelle nach Anspruch 25, **dadurch gekennzeichnet, dass** die Schubsteifigkeit der Bodengruppe durch die Befestigung der Sicherheitszelle erhöht ist.

27. Sicherheitszelle nach einem oder mehreren der Ansprüche 1 bis 26, **dadurch gekennzeichnet, dass** zumindest deren Außenkontur mit einer feuerfesten oder flammbeständigen Beschichtung oder Folie versehen ist.

28. Sicherheitszelle nach einem oder mehreren der Ansprüche 1 bis 27, **dadurch gekennzeichnet, dass** zumindest deren Außenkontur mit einer hitzebeständigen Beschichtung oder Folie versehen ist.

29. Sicherheitszelle nach einem oder mehreren der Ansprüche 1 bis 28, **dadurch gekennzeichnet, dass** im Bereich der Seitenwände (SW1,SW2) und/oder des Fußbereiches (FB) ein oder mehrere Airbags integriert sind, deren Anbindung über Funktionselemente erfolgt.

30. Sicherheitszelle nach einem oder mehreren der Ansprüche 1 bis 29, **dadurch gekennzeichnet, dass** der am weitesten in Richtung zur Außenseite des Fahrzeuges angeordnete Seitenwandbereich und/oder der Fußbereich eine im Vergleich zu den anderen Bereichen der Sitzzelle erhöhte Anzahl von Kohlenstofffaserschichten und/oder Schichten aus Aluminium oder Aluminiumwabenstruktur aufweist.

## Claims

1. A safety cage, especially for motor vehicles in touring car racing sports, made of carbon fibre reinforced plastic (CFK) in monocoque construction, with the monocoque consisting of a seat area (SA) and a foot area (FB) and comprises side wall regions (SW1, SW2), **characterized in that** the monocoque is made of long-fibre carbon fibres with a laminar structure in combination with aluminium and/or an aluminium honeycomb structure.

2. A safety cage according to claim 1, **characterized in that** the stiffness of the safety cage can be varied by means of fibre orientation and/or orientation of individual fibres or fibre layers relative to each other.

3. A safety cage according to one of the claims 1 or 2, **characterized in that** the linkage of function carriers and/or linkage points (A) occurs by means of receiving blocks to be introduced separately.

4. A safety cage according to claim 3, **characterized in that** the linkage of the receiving blocks may occur through aluminium plates integrated in the monocoque structure.

5. A safety cage according to one or several of the claims 1 to 4, **characterized in that** the mean stiffness of the overall structure is increased by the linkage and dimensioning of function carriers and/or linkage points (A).

6. A safety cage according to one or several of the claims 3 to 5, **characterized in that** at least one function carrier (LB) integrated on the upper side of the foot area (FB) is formed as a linkage for the steering column.

7. A safety cage according to one or several of the claims 3 to 6, **characterized in that** a function carrier (SB) is formed in one of the side walls (SW1, SW2) as a fastening for the shift lever mechanism.

8. A safety cage according to one or several of the claims 3 to 7, **characterized in that** a function carrier integrated in the bottom side of the foot area (FB) is formed as a fastening for the pedal system.

9. A safety cage according to one or several of the claims 3 to 8, **characterized in that** the monocoque comprises openings for linking the function carriers.

10. A safety cage according to one or several of the claims 3 to 9, **characterized in that** the monocoque comprises recesses for linking the function carriers.

11. A safety cage according to one or several of the claims 1 to 10, **characterized in that** the monocoque is partly or completely sealed at the end of the foot area (FB).

12. A safety cage according to one or several of the claims 1 to 11, **characterized in that** the monocoque comprises openings and/or bores in the backrest area (SR), side wall area (SW1, SW2) and floor area (BB).

13. A safety cage according to one or several of the claims 3 to 12, **characterized in that** the linkage of the monocoque to the chassis structure occurs through openings and/or bores in the floor area (BB) and/or openings/bores in the side wall area (SW1, SW2) and/or through linkage points (A) in the floor area (BB).

14. A safety cage according to one or several of the claims 1 to 13, **characterized in that** the side wall (SW1) of the monocoque facing the driver's door completely covers the laterally projected surface area of the driver when sitting upright and in a position inclined in the longitudinal component direction up to his/her shoulder with respect to height and width.

15. A safety cage according to one or several of the claims 1 to 14, **characterized in that** the side wall (SW2) of the monocoque averted from the driver's door completely covers the laterally projected surface area of the driver when sitting upright up to his/her shoulder with respect to height and width.

16. A safety cage according to one or several of the claims 1 to 15, **characterized in that** the end of the seat area (SA) facing in the direction towards the head region overlaps a head protection area.

17. A safety cage according to one or several of the claims 1 to 16, **characterized in that** the head protection area can be fastened on the inside and/or outside to the seat area (SA).

18. A safety cage according to one or several of the claims 1 to 17, **characterized in that** the head protection area is arranged on a seat receiving means which can be fastened in the seat area (SA).

19. A safety cage according to one or several of the claims 1 to 18, **characterized in that** a passenger restraining system is integrated in the monocoque.

20. A safety cage according to one or several of the claims 1 to 19, **characterized in that** the steering column is height-adjustable by means of the dimensioning of the receiving block.

21. A safety cage according to one or several of the claims 1 to 20, **characterized in that** the monocoque maintains its position in the vehicle under the influence of high deformation forces.

22. A safety cage according to one or several of the claims 6 to 21, **characterized in that** the steering column is held in a load-dependent manner.

23. A safety cage according to one or several of the claims 1 to 22, **characterized in that** the upper edge of the first side wall (SW1) from the seat area (SA) to the foot area (FB) extends at first in a convex arched radius (R1), thereafter in a substantially linear area (L) at an acute angle (α) in a direction towards the foot area (FB) downwardly inclined area (L) and an adjacent concave arched radius (R2).

24. A safety cage according to one or several of the claims 1 to 23, **characterized in that** the upper edge of the second side wall (SW2) extends at first from the seat area (SA) to the foot area (FB) in a convex arched radius (R3), which is bordered by a linear area (L2) facing vertically in the direction towards the floor area (BB), to which is adjacent a substantially convex arched area (R4).

25. A safety cage according to one or several of the claims 12 to 24, **characterized in that** a total of eight linkage points (A) for fastening to the floor pan are integrated in the floor area (BB) of the passenger compartment, with four rows each being provided with two linkage points (A) each arranged in pairs at a distance from each other.

26. A safety cage according to claim 25, **characterized in that** the shear rigidity of the floor pan is increased by the fastening of the safety cage.

27. A safety cage according to one or several of the claims 1 to 26, **characterized in that** at least its outside contour is provided with a fireproof or flameproof coating or film.

28. A safety cage according to one or several of the claims 1 to 27, **characterized in that** at least its outside contour is provided with a heat-resistant coating or film.

29. A safety cage according to one or several of the claims 1 to 28, **characterized in that** one or several airbags are integrated in the region of the side walls (SW1, SW2) and/or the foot area (FB), the linkage of which is carried out through function elements.

30. A safety cage according to one or several of the claims 1 to 29, **characterized in that** the side wall area and/or foot area disposed farthest in the direction towards the outside of the vehicle is provided with a number of carbon fibre layers and/or layers of aluminium or aluminium honeycomb structure which is increased in comparison with the other areas of the passenger compartment.

## Revendications

1. Cellule de sécurité, notamment pour véhicules de compétition, réalisée en plastique renforcé par des fibres de carbone (CFRP) en construction monocoque, la monocoque étant constituée par une partie assise (SA) et une partie pour les jambes (FB) et comportant des parties formant les parois latérales (SW1, SW2), **caractérisée en ce que** la monocoque est réalisée en longues fibres de carbone de structure stratifiée en combinaison avec de l'aluminium et/ou une structure alvéolaire en aluminium.

2. Cellule de sécurité selon la revendication 1, **caractérisée en ce que** la rigidité de la cellule de sécurité est variable au moyen de l'orientation des fibres et/ou de l'orientation entre des fibres individuelles ou des couches de fibres.

3. Cellule de sécurité selon l'une quelconque des revendications 1 ou 2, **caractérisée en ce que** le rattachement d'éléments fonctionnels et/ou de points d'attache (A) se fait par des blocs de réception destinés à être introduits séparément.

4. Cellule de sécurité selon la revendication 3, **caractérisée en ce que** le rattachement des blocs de réception peut être réalisé par l'intermédiaire de plaques d'aluminium intégrées dans la structure monocoque.

5. Cellule de sécurité selon une ou plusieurs des revendications 1 à 4, **caractérisée en ce que** la rigidité moyenne de la structure dans son ensemble est augmentée par le rattachement et le dimensionnement des éléments fonctionnels et/ou des points d'attache (A).

6. Cellule de sécurité selon une ou plusieurs des revendications 3 à 5, **caractérisée en ce qu'**au moins un élément fonctionnel (LB) intégré dans la face supérieure de la partie pour les jambes (FB) est conformé en forme d'attache pour la colonne de direction.

7. Cellule de sécurité selon une ou plusieurs des revendications 3 à 6, **caractérisée en ce qu'**un élément fonctionnel (SB) prévu dans une des parois latérales (SW1, SW2) est conformé en forme de fixation pour le mécanisme du levier de changement de vitesses.

8. Cellule de sécurité selon une ou plusieurs des revendications 3 à 7, **caractérisée en ce qu'**un élément fonctionnel intégré dans la face inférieure de la partie pour les jambes (FB) est conformé en forme de fixation pour le pédalier.

9. Cellule de sécurité selon une ou plusieurs des revendications 3 à 8, **caractérisée en ce que** la monocoque comporte des ouvertures destinées à y attacher les éléments fonctionnels.

10. Cellule de sécurité selon une ou plusieurs des revendications 3 à 9, **caractérisée en ce que** la monocoque comporte des renfoncements destinés à y attacher les éléments fonctionnels.

11. Cellule de sécurité selon une ou plusieurs des revendications 1 à 10, **caractérisée en ce que** la monocoque est fermée partiellement ou intégralement à l'extrémité de la partie pour les jambes (FB).

12. Cellule de sécurité selon une ou plusieurs des revendications 1 à 11, **caractérisée en ce que** la monoque comporte des ouvertures et/ou des trous à la hauteur du dossier (SR), des parois latérales (SW1, SW2) et du fond (BB).

13. Cellule de sécurité selon une ou plusieurs des revendications 3 à 12, **caractérisée en ce que** le rattachement de la monocoque à la structure du châssis est réalisé par l'intermédiaire d'ouvertures et/ou de trous pratiqués dans la partie du fond (BB) et/ou d'ouvertures/trous pratiqués dans la partie formant les parois latérales (SW1, SW2) et/ou par l'intermédiaire de points d'attache (A) prévus dans la partie du fond (BB).

14. Cellule de sécurité selon une ou plusieurs des revendications 1 à 13, **caractérisée en ce que** la paroi latérale (SW1) de la monocoque tournée vers la porte du pilote recouvre intégralement en hauteur et en largeur l'aire, projetée latéralement, du pilote jusqu'à son épaule en position assise droite comme en position inclinée dans le sens de la longueur de la pièce.

15. Cellule de sécurité selon une ou plusieurs des revendications 1 à 14, **caractérisée en ce que** la paroi latérale (SW2) de la monocoque détournée de la porte du pilote recouvre intégralement en hauteur et en largeur l'aire, projetée latéralement, du pilote jusqu'à son épaule en position assise droite.

16. Cellule de sécurité selon une ou plusieurs des revendications 1 à 15, **caractérisée en ce que** l'extrémité de la partie assise (SA) dirigée vers la partie tête chevauche une partie protégeant la tête.

17. Cellule de sécurité selon une ou plusieurs des revendications 1 à 16, **caractérisée en ce que** la partie protégeant la tête est apte à être fixée à la partie assise (SA) à l'intérieur et/ou à l'extérieur de celle-ci.

18. Cellule de sécurité selon une ou plusieurs des revendications 1 à 17, **caractérisée en ce que** la partie protégeant la tête est montée sur un logement du siège apte à être fixé dans la partie assise (SA).

19. Cellule de sécurité selon une ou plusieurs des revendications 1 à 18, **caractérisée en ce qu'**un système de retenue de passagers est intégré dans la monocoque.

20. Cellule de sécurité selon une ou plusieurs des revendications 6 à 19, **caractérisée en ce que** la colonne de direction est réglable en hauteur par le dimensionnement du bloc de réception.

21. Cellule de sécurité selon une ou plusieurs des revendications 1 à 20, **caractérisée en ce que** la monocoque conserve sa position dans le véhicule sous l'effet d'efforts de déformation importants.

22. Cellule de sécurité selon une ou plusieurs des revendications 6 à 21, **caractérisée en ce que** la colonne de direction est montée en fonction de la charge.

23. Cellule de sécurité selon une ou plusieurs des revendications 1 à 22, **caractérisée en ce que** le rebord supérieur de la première paroi latérale (SW1) décrit, depuis la partie assise (SA) jusqu'à la partie pour les jambes (FB), d'abord une courbure de rayon convexe (R1), prolongée par une partie approximativement linéaire (L) formant un angle aigu (α) et inclinée vers le bas en direction de la partie pour les jambes (FB) et ensuite une courbure de rayon concave (R2).

24. Cellule de sécurité selon une ou plusieurs des revendications 1 à 23, **caractérisée en ce que** le rebord supérieur de la deuxième paroi latérale (SW2) décrit, depuis la partie assise (SA) jusqu'à la partie pour les jambes (FB), d'abord une courbure de rayon convexe (R3) prolongée par une partie (L2) linéaire perpendiculaire au fond (BB) à laquelle est attenante une partie sensiblement convexe (R4).

25. Cellule de sécurité selon une ou plusieurs des revendications 12 à 24, **caractérisée en ce que** dans le fond (BB) de la cellule siège sont intégrés 8 points d'attache (A) destinés à être fixés au dessous de caisse, quatre rangées comportant chacune deux points d'attache (A) disposés par paires avec un écartement entre eux étant prévues.

26. Cellule de sécurité selon la revendication 25, **caractérisée en ce que** la résistance au cisaillement du dessous de caisse est augmentée par la fixation de la cellule de sécurité.

27. Cellule de sécurité selon une ou plusieurs des revendications 1 à 26, **caractérisée en ce que** du moins son contour extérieur est muni d'un revêtement ou d'une feuille ignifuge ou ininflammable.

28. Cellule de sécurité selon une ou plusieurs des revendications 1 à 27, **caractérisée en ce que** du moins son contour extérieur est muni d'un revêtement ou d'une feuille résistant à la chaleur.

29. Cellule de sécurité selon une ou plusieurs des revendications 1 à 28, **caractérisée en ce qu'**un ou plusieurs airbags, que l'on attache par l'intermédiaire d'éléments fonctionnels, sont intégrés dans la partie formant les parois latérales (SW1, SW2) et/ou dans la partie pour les jambes (FB).

30. Cellule de sécurité selon une ou plusieurs des revendications 1 à 29, **caractérisée en ce que** la partie formant les parois latérales la plus proche du côté extérieur du véhicule et/ou la partie pour les jambes comporte(nt) un nombre de couches de fibres de carbone et/ou de couches en aluminium ou en structure alvéolaire en aluminium augmenté par rapport aux autres parties de la cellule siège.
